# EUROPEAN PATENT SPECIFICATION

(11) **EP 4 565 004 B1**
(45) Date of publication and mention of the grant of the patent: **02.09.2026**
(21) Application number: 23846399.6
(22) Date of filing: 21.07.2023
(51) Int. Cl.: H05B 6/10, H05B 6/36, H05B 6/44

(54) **TRANSVERSE-TYPE INDUCTION HEATING DEVICE**
QUERINDUKTIONSHEIZVORRICHTUNG
DISPOSITIF DE CHAUFFAGE PAR INDUCTION DE TYPE TRANSVERSAL

(30) Priority: 29.07.2022 JP 2022121377
(43) Date of publication of application: 04.06.2025
(73) Proprietor: NIPPON STEEL CORPORATION, Chiyoda-ku Tokyo 100-8071 (JP)
(72) Inventor: MORITA, Kento, Tokyo 100-8071 (JP); MAYUMI, Yasuhiro, Tokyo 100-8071 (JP)
(74) Representative: Vossius & Partner Patentanwälte Rechtsanwälte mbB
(86) International application number: PCT/JP2023/026773
(87) International publication number: WO 2024/024668

(56) References cited:
- WO-A1-2013/015297
- CN-U- 215 453 329
- JP-A- 2010 108 605
- JP-A- 2010 108 605
- JP-A- S58 113 325
- JP-A- S6 398 993
- US-A1- 2019 029 080

## Description

### TECHNICAL FIELD

The present invention relates to a transverse flux induction heating device. This application is based upon and claims the benefit of priority of the prior Japanese Patent Application No. 2022-121377, filed on July 29, 2022.

### BACKGROUND ART

As a device of heating a conductor plate, there is an induction heating device. The induction heating device has a coil. An alternating magnetic field (alternating-current magnetic field) is generated from the coil of the induction heating device. An eddy current is induced in the conductor plate by the alternating magnetic field. The conductor plate is heated by Joule heat based on the eddy current. As such an induction heating device, there is a transverse flux induction heating device. The transverse flux induction heating device makes alternating magnetic fields intersect substantially perpendicular (preferably perpendicular) to the conductor plate, to thereby induce the eddy current in the conductor plate.

As the transverse flux induction heating device, there are techniques described in Patent Literatures 1 to 3.

Patent Literature 1 discloses that one U-shaped core, a core obtained by arranging two U-shaped cores in an adjacent manner, and a core obtained by arranging three or more of U-shaped cores in an adjacent manner, are used as cores of a transverse flux induction heating device.

Further, Patent Literature 2 also discloses that the above-described core obtained by arranging the two U-shaped cores in an adjacent manner (E-shaped core) is used as a core of a transverse flux induction heating device.

Further, Patent Literature 3 discloses that a core having a plurality of leg portions arranged in a zigzag form at a certain interval in a conveyance direction of a conductor plate, is used as a core of a transverse flux induction heating device.

### CITATION LIST

### PATENT LITERATURE

Patent Literature 1: Japanese Laid-open
Patent Publication No. 2010-257894
Patent Literature 2: Japanese Laid-open Patent Publication No. 2010-27470
Patent Literature 3: Japanese Utility Model Application Publication No. 02-69959

JP 2010 108605A discloses a transverse flux induction heating device according to the preamble of claim 1.

### SUMMARY OF INVENTION

### TECHNICAL PROBLEM

However, in the techniques described in Patent Literatures 1 to 3, alternating magnetic fields to be intersected with respect to the conductor plate become uniform between a region on an inlet side (an upstream side in the conveyance direction of the conductor plate) and a region on an outlet side (a downstream side in the conveyance direction of the conductor plate) of the transverse flux induction heating device. Therefore, a heating amount with respect to the conductor plate becomes the same between the region on the inlet side and the region on the outlet side of the transverse flux induction heating device. Accordingly, it may not be able to satisfy the quality required as the quality of the conductor plate.

The present invention has been made in view of the problems as described above, and an object thereof is to provide a transverse flux induction heating device capable of performing induction heating on a conductor plate so as to satisfy the quality required of the conductor plate.

### SOLUTION TO PROBLEM

A transverse flux induction heating device of the present invention is a transverse flux induction heating device including an upper inductor and a lower inductor arranged to face each other while sandwiching a conductor plate therebetween, and performing induction heating on the conductor plate by making alternating magnetic fields intersect a plate surface of the conductor plate, in which each of the upper inductor and the lower inductor has a coil and a core, a volume of one piece of the core provided to the upper inductor and a volume of one piece of the core provided to the lower inductor are respectively different between a heating upstream-side region of the one piece of core and a heating downstream-side region of the one piece of core, the heating upstream-side region of the core is a region on an upstream side in a conveyance direction of the conductor plate relative to a reference position of the core, the heating downstream-side region of the core is a region on a downstream side in the conveyance direction of the conductor plate relative to the reference position of the core, the reference position of the core is a center position in a heating length direction between a most upstream end position of coil of the core and a most downstream end position of coil of the core, the heating length direction is a direction parallel to the conveyance direction of the conductor plate, the most upstream end position of coil of the core is a position of an end portion positioned on the most upstream side in the heating length direction, out of end portions of the coil arranged with respect to the core, the most downstream end position of coil of the core is a position of an end portion positioned on the most downstream side in the heating length direction, out of end portions of the coil arranged with respect to the core, a same main magnetic flux flows through one piece of the core provided to the upper inductor, a same main magnetic flux flows through one piece of the core provided to the lower inductor, and the main magnetic flux is a magnetic flux that passes through the conductor plate.

### BRIEF DESCRIPTION OF DRAWINGS

[Fig. 1] Fig. 1 is a sectional view illustrating one example of a transverse flux induction heating device.
[Fig. 2A] Fig. 2A is a plan view illustrating one example of the transverse flux induction heating device.
[Fig. 2B] Fig. 2B is a bottom view illustrating one example of the transverse flux induction heating device.
[Fig. 3] Fig. 3 is a back view illustrating one example of the transverse flux induction heating device.
[Fig. 4] Fig. 4 is a front view illustrating one example of the transverse flux induction heating device.
[Fig. 5] Fig. 5 is a view conceptually illustrating one example of a main magnetic flux that flows through the induction heating device.
[Fig. 6A] Fig. 6A is a view conceptually illustrating one example of a heating value of a conductor plate that is heated by using the induction heating device of the present embodiment.
[Fig. 6B] Fig. 6B is a view conceptually illustrating one example of a heating value of a conductor plate that is heated by using two general induction heating devices.

### DESCRIPTION OF EMBODIMENTS

Hereinafter, an embodiment of the present invention will be explained while referring to the drawings.

Note that when comparison targets such as lengths, positions, sizes and intervals are the same, this means not only a case where they are strictly the same but also a case where they are differed within a range that does not depart from the gist of the invention (differed within a tolerance range defined when designing, for example). Further, in the respective drawings, only a part required for explanation will be illustrated in a simplified manner according to need, for the convenience of explanation and notation. Further, in each drawing, x-y-z coordinates indicate a relation of directions in the drawing. A symbol of white circle (o) with cross mark (×) given therein indicates an axis regarding which a direction from a near side toward a far side of the paper sheet is a positive direction. Further, a symbol of white circle (∘) with black circle (•) given therein indicates an axis regarding which a direction from the far side toward the near side of the paper sheet is a positive direction. Further, the present embodiment exemplifies a case where an x-y plane is a horizontal plane, and a z-axis direction is a height direction.

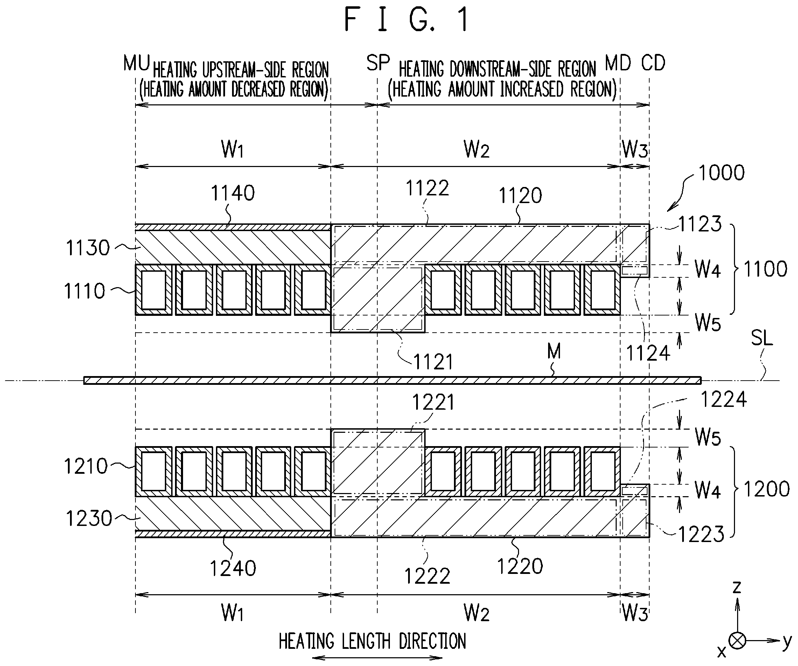

Fig. 1 to Fig. 4 are views each illustrating one example of a transverse flux induction heating device. The present embodiment exemplifies a case where a conveyance direction of a conductor plate M is a y-axis positive direction, a width direction of the conductor plate M is an x-axis direction, and a plate thickness direction of the conductor plate M is a z-axis direction. In this case, an upstream side in the conveyance direction of the conductor plate M is a y-axis negative direction side, and a downstream side in the conveyance direction of the conductor plate M is a y-axis positive direction side. Here, a direction parallel to the conveyance direction of the conductor plate M (y-axis positive direction) (specifically, the y-axis direction) is set to be referred to as a heating length direction. The heating length direction corresponds to a longitudinal direction of the conductor plate M.

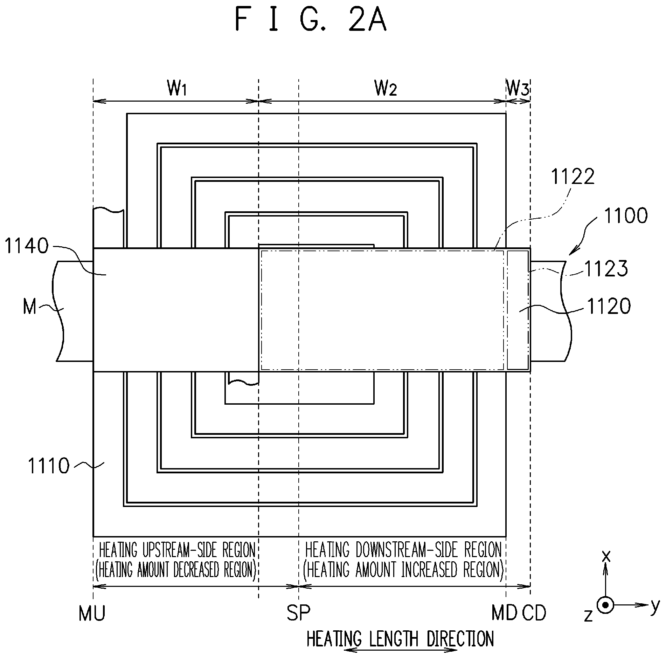

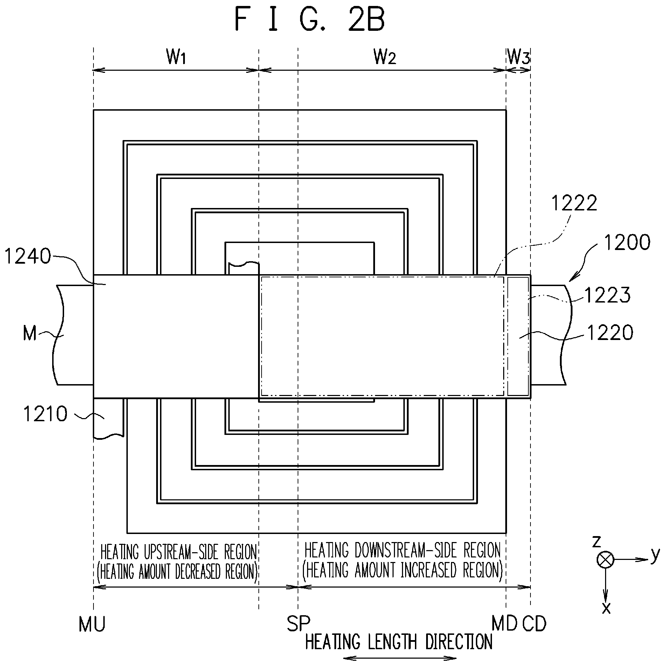

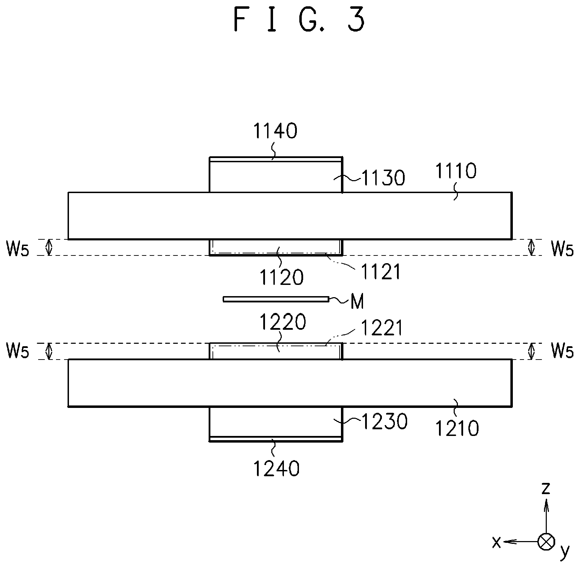

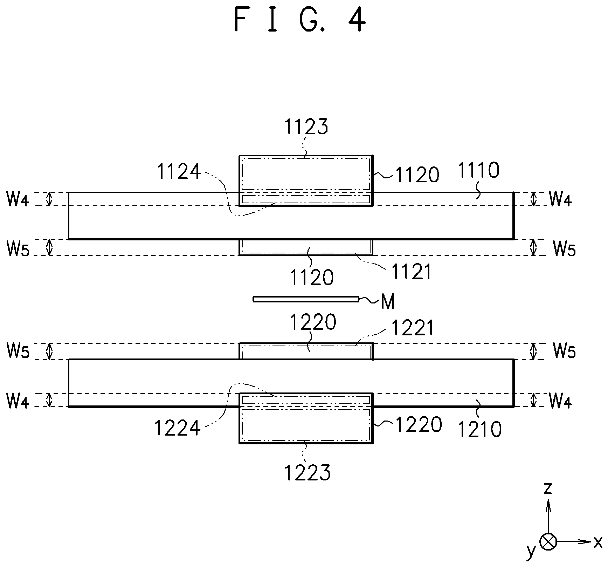

Fig. 1 illustrates a cross section (y-z cross section) of a transverse flux induction heating device 1000 in a case where the device is cut perpendicular to the width direction of the conductor plate M (x-axis direction). Fig. 2A illustrates a state (plan view) in which the transverse flux induction heating device 1000 is seen from above the device (from the z-axis positive direction side). Fig. 2B illustrates a state (bottom view) in which the transverse flux induction heating device 1000 is seen from below the device (from the z-axis negative direction side). Fig. 3 illustrates a state (back view) in which the transverse flux induction heating device 1000 is seen from the upstream side in the conveyance direction of the conductor plate M (from the y-axis negative direction side). Fig. 4 illustrates a state (front view) in which the transverse flux induction heating device 1000 is seen from the downstream side in the conveyance direction of the conductor plate M (from the y-axis positive direction side). In the explanation below, the conveyance direction of the conductor plate M will be abbreviated to a conveyance direction according to need, the width direction of the conductor plate M will be abbreviated to a width direction according to need, and the plate thickness direction of the conductor plate M will be abbreviated to a plate thickness direction according to need.

The transverse flux induction heating device 1000 performs induction heating on the conductor plate M by making alternating magnetic fields intersect substantially perpendicular (preferably perpendicular) to a plate surface of the conductor plate M during conveyance. Note that the conductor plate M is a metal plate such as a steel plate, for example. In the following explanation, the transverse flux induction heating device will be abbreviated to an induction heating device, according to need. Hereinbelow, one example of a configuration of the induction heating device 1000 will be explained. Note that dimensions (W₁ to W₅) of the induction heating device 1000 will be described later in a section of (design method).

### (Induction heating device 1000)

The induction heating device 1000 has an upper inductor 1100 and a lower inductor 1200. The upper inductor 1100 and the lower inductor 1200 are arranged in a state of having an interval therebetween in the plate thickness direction of the conductor plate M (z-axis direction) so as to face each other while sandwiching the conductor plate M therebetween. As described above, the plate thickness direction of the conductor plate M (z-axis direction) corresponds to the direction in which the upper inductor 1100 and the lower inductor 1200 face each other. In the induction heating device 1000 illustrated in Fig. 1 to Fig. 4, a case is exemplified in which the upper inductor 1100 and the lower inductor 1200 are in a relation of plane symmetry in which a virtual plane SL is set to a plane of symmetry. The virtual plane SL is a plane passing through a center position in the plate thickness direction of the conductor plate M (z-axis direction) and a plane parallel to the width direction (x-axis direction) and the longitudinal direction (y-axis direction). Note that the virtual plane SL is not a real plane.

The upper inductor 1100 and the lower inductor 1200 have coils 1110, 1210, and cores 1120, 1220, respectively.

A turn number of each of the coils 1110, 1210 is N (N is an integer of 1 or more). The turn number of the coils 1110, 1210 is not limited. Fig. 1 and Fig. 2 exemplify a case where the turn number N of each of the coils 1110, 1210 is five. The coils 1110, 1210 are respectively arranged so that center lines of the coils 1110, 1210 become substantially orthogonal (preferably orthogonal) to the plate surface of the conductor plate M, for example. The coils 1110, 1210 may be electrically connected in series, or they may also be electrically connected in parallel. In this case, alternating currents that flow through the coils 1110, 1210 are alternating currents supplied from the same alternating-current power supply. Further, the coils 1110, 1210 may not be electrically connected. In this case, the alternating currents that flow through the coils 1110, 1210 are alternating currents supplied from separate alternating-current power supplies. Note that the electrical connection in series means the same as a series connection that is generally used in a field of electric circuit. Further, the electrical connection in parallel means the same as a parallel connection that is generally used in the field of electric circuit. In the explanation below, the electrical connection in series will be simply referred to as a series connection, according to need. Further, the electrical connection in parallel will be simply referred to as a parallel connection, according to need.

It is only required to realize that directions at the same time of magnetic fluxes generated from the coils 1110, 1210 by the alternating currents that flow through the coils 1110, 1210 from the alternating-current power supply are set to be substantially the same (preferably the same), and alternating magnetic fields generated from the coils 1110, 1210 are made to intersect substantially perpendicular (preferably perpendicular) to the plate surface of the conductor plate M.

Note that when the coils 1110, 1210 are connected in series in the example illustrated in Fig. 1, Fig. 2A, and Fig. 2B, the turn number of the whole coils 1110, 1210 in the induction heating device 1000 becomes ten (= 2 × 5). On the other hand, when the coils 1110, 1210 are connected in parallel, the turn number of the whole coils 1110, 1210 in the induction heating device 1000 becomes five.

Fig. 1 to Fig. 4 exemplify a case where the coils 1110, 1210 are configured by using a copper pipe. The copper pipe has a hollow rectangular parallelepiped shape, for example. A cooling medium (cooling water, for example) is supplied to a hollow portion of the copper pipe. Note that here, in order to simplify the notation, a case is exemplified in which a vortical copper pipe is used to configure the coils 1110, 1210, as illustrated in Fig. 2A and Fig. 2B. However, the configuration of the coils 1110, 1210 is not limited to such a configuration. The induction heating device 1000 may also have a coil having a well-known configuration adopted in induction heating devices.

The coils 1110, 1210 are arranged in (wound around) the cores 1120, 1220, respectively. The cores 1120, 1220 are configured by using a soft magnetic material. Further, volumes of the cores 1120, 1220 are different between a heating upstream-side region and a heating downstream-side region. The heating upstream-side region is a region on an upstream side (y-axis negative direction side) in the conveyance direction relative to a reference position SP. The heating downstream-side region is a region on a downstream side (y-axis positive direction side) in the conveyance direction relative to the reference position SP. In the explanation below, the upstream side in the conveyance direction and the downstream side in the conveyance direction will be abbreviated to an upstream side and a downstream side, respectively, according to need.

The reference position SP is a center position in the heating length direction (y-axis direction) between a most upstream end position of coil MU and a most downstream end position of coil MD. The most upstream end position of coil MU is a position of an end portion positioned on the most upstream side (y-axis negative direction side) in the heating length direction (y-axis direction) out of positions of end portions of the coils 1110, 1210. The most downstream end position of coil MD is a position of an end portion positioned on the most downstream side (y-axis positive direction side) in the heating length direction (y-axis direction) out of the positions of the end portions of the coils 1110, 1210.

As exemplified in Fig. 1, when the number of coils 1110, 1210 arranged in the heating length direction (y-axis direction) with respect to one core 1120, 1220 is one, the most upstream end position of coil MU is a position of the end portion positioned on the most upstream side (y-axis negative direction side) in the heating length direction (y-axis direction), out of the positions of the end portions of the coils 1110, 1210. Further, the most downstream end position of coil MD is a position of the end portion positioned on the most downstream side (y-axis positive direction side) in the heating length direction (y-axis direction), out of the positions of the end portions of the coils 1110, 1210.

On the other hand, when a plurality of coils are arranged with respect to one core 1120, 1220 so as to be lined while having an interval therebetween in the heating length direction (y-axis direction), the most upstream end position of coil MU is defined in the coil positioned on the most upstream side (y-axis negative direction side) in the heating length direction, out of the plurality of coils. Specifically, the most upstream end position of coil MU is a position of the end portion positioned on the most upstream side in the heating length direction, out of the positions of the end portions of the coil positioned on the most upstream side in the heating length direction. Further, the most downstream end position of coil MD is defined in the coil positioned on the most downstream side (y-axis positive direction side) in the heating length direction, out of the plurality of coils. Specifically, the most downstream end position of coil MD is a position of the end portion positioned on the most downstream side in the heating length direction, out of the positions of the end portions of the coil positioned on the most downstream side in the heating length direction.

As described above, the volume of one core 1120 provided to the upper inductor 1100 is different between the heating upstream-side region of the one core 1120 and the heating downstream-side region of the one core 1120. In like manner, the volume of one core 1220 provided to the lower inductor 1200 is different between the heating upstream-side region of the one core 1220 and the heating downstream-side region of the one core 1220.

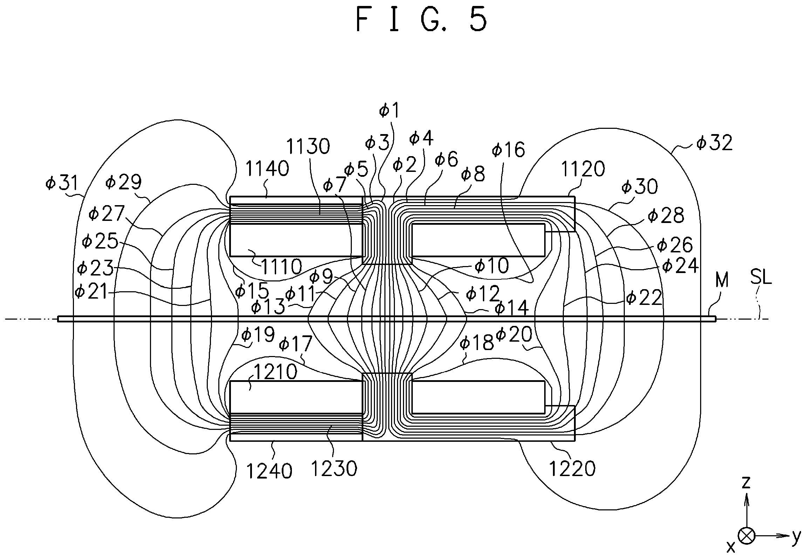

Here, the same main magnetic flux flows through one core 1120 provided to the upper inductor 1100. In like manner, the same main magnetic flux flows through one core 1220 provided to the lower inductor 1200. Fig. 5 is a view conceptually illustrating one example of the main magnetic flux that flows through the induction heating device 1000. Note that in Fig. 5, the configuration of the coils 1110, 1210 is illustrated in a simplified manner. Further, in Fig. 5, hatching indicating a cross section is omitted.

The main magnetic flux is a magnetic flux that contributes to heating of the conductor plate M. The main magnetic flux is a magnetic flux that passes through the conductor plate M, out of magnetic fluxes generated from the cores 1120, 1220. The main magnetic flux intersects substantially orthogonal (preferably orthogonal) to the plate surface of the conductor plate M. As illustrated in Fig. 5, magnetic flux lines ϕ1 to ϕ32 expressing the main magnetic flux respectively have the same starting point and end point. Specifically, as illustrated in Fig. 5, a path (magnetic path) configured by the individual magnetic flux lines ϕ1 to ϕ32 becomes a closed path. Fig. 5 exemplifies a case where the path (magnetic path) configured by the magnetic flux lines ϕ1 to ϕ32 is a closed path passing through the core 1120 provided to the upper inductor 1100, the conductor plate M, and the core 1220 provided to the lower inductor 1200.

In the upper inductor 1100, the same magnetic flux flows through the core 1120. Specifically, there exists, inside the core 1120, the path (magnetic path) configured by the same magnetic flux lines ϕ1 to ϕ32. Therefore, the core 1120 is one core. In like manner, in the lower inductor 1200, the same magnetic flux flows through the core 1220. Specifically, there exists, inside the core 1220, the path (magnetic path) configured by the same magnetic flux lines ϕ1 to ϕ32. Therefore, the core 1220 is one core. Fig. 1 to Fig. 4 exemplify a case where the cores 1120, 1220 are respectively configured in an integrated manner. It is assumed that a plurality of portions configuring a core are arranged in a state of having an interval therebetween. When the same main magnetic flux flows through the plurality of portions, the core configured by the plurality of portions is one core.

On the other hand, in the upper inductor 1100, a core through which the same main magnetic flux as such a main magnetic flux does not flow, is not the same core (specifically, a different core). In like manner, in the lower inductor 1200, a core through which the same main magnetic flux as such a main magnetic flux does not flow, is a different core. Further, even if the same main magnetic flux flows through the core 1120 provided to the upper inductor 1100 and the core 1220 provided to the lower inductor 1200, the cores are different cores.

As described above, Fig. 1 to Fig. 4 exemplify a case where the upper inductor 1100 has one core 1120. Further, Fig. 1 to Fig. 4 exemplify a case where the volume in the heating downstream-side region of the core 1120 is larger than the volume in the heating upstream-side region of the core 1120. In like manner, Fig. 1 to Fig. 4 exemplify a case where the lower inductor 1200 has one core 1220. Further, Fig. 1 to Fig. 4 exemplify a case where the volume in the heating downstream-side region of the core 1220 is larger than the volume in the heating upstream-side region of the core 1220. The reason why the volume in the heating downstream-side region of the cores 1120, 1220 is set to be larger than the volume in the heating upstream-side region of the cores 1120, 1220, is because a heating value of the conductor plate M (specifically, a heating amount with respect to the conductor plate M) that is passing through the heating downstream-side region is set to be larger than the heating value of the conductor plate M that is passing through the heating upstream-side region. In the explanation below, out of the heating upstream-side region and the heating downstream-side region, the region with smaller volume of the core will be referred to as a heating amount decreased region, according to need. Further, the region with larger volume of the core will be referred to as a heating amount increased region, according to need. Fig. 1 to Fig. 4 exemplify a case where the heating upstream-side region is the heating amount decreased region, and the heating downstream-side region is the heating amount increased region. This is why (heating amount decreased region) is described below the heating upstream-side region, and (heating amount increased region) is described below the heating downstream-side region in Fig. 1, Fig. 2A, and Fig. 2B.

In Fig. 1 to Fig. 4, a case is exemplified in which a region from the most upstream end position of coil MU to the reference position SP, in the region in the heating length direction (y-axis direction) of the induction heating device 1000, is the heating upstream-side region (heating amount decreased region). Further, in Fig. 1, Fig. 2A, and Fig. 2B, a case is exemplified in which a region from the reference position SP to a most downstream position CD, in the region in the heating length direction (y-axis direction) of the upper inductor 1100, is the heating downstream-side region (heating amount increased region). In like manner, in Fig. 1, Fig. 2A, and Fig. 2B, a case is exemplified in which a region from the reference position SP to the most downstream position CD, in the region in the heating length direction (y-axis direction) of the lower inductor 1200, is the heating downstream-side region (heating amount increased region). The most downstream position CD is a position of an end portion positioned on the most downstream side (y-axis positive direction side) in the heating length direction (y-axis direction), out of the end portions of the upper inductor 1100 and the lower inductor 1200.

On the contrary to the example illustrated in Fig. 1 to Fig. 4, in one core provided to the upper inductor, the volume in the heating upstream-side region may be larger than the volume in the heating downstream-side region. In like manner, in one core provided to the lower inductor, the volume in the heating upstream-side region may be larger than the volume in the heating downstream-side region. It is configured as above when the heating value of the conductor plate M (specifically, the heating amount with respect to the conductor plate M) that is passing through the heating upstream-side region is made to be larger than the heating value of the conductor plate M that is passing through the heating downstream-side region. In this case, the heating downstream-side region is the heating amount decreased region, and the heating upstream-side region is the heating amount increased region. For example, when the induction heating device 1000 illustrated in Fig. 1 to Fig. 4 is in a state of being rotated by 180°, it is possible to realize one example of the induction heating device in which the volume of the core in the heating upstream-side region is larger than that in the heating downstream-side region. Therefore, an illustration of such an induction heating device will be omitted. Note that a position in the heating length direction (y-axis direction) of a rotation axis when rotating the induction heating device 1000 illustrated in Fig. 1 to Fig. 4 by 180° is, for example, the reference position SP. Further, a position in the width direction (x-axis direction) of the rotation axis is, for example, a center position of the cores 1120, 1220, and further, a direction in which the rotation axis extends is, for example, the plate thickness direction (z-axis direction).

The volumes of the cores 1120, 1220 are made to differ between the heating upstream-side region and the heating downstream-side region as described above. Therefore, the heating value of the conductor plate M (specifically, the heating amount with respect to the conductor plate M) that is passing through the heating downstream-side region and the heating value of the conductor plate M that is passing through the heating upstream-side region can be made to differ so as to satisfy the quality required of the conductor plate M. Accordingly, it is possible to improve the quality of the conductor plate M.

At which degree the heating value of the conductor plate M that is passing through the heating downstream-side region and the heating value of the conductor plate M that is passing through the heating upstream-side region should be differed to satisfy the quality required of the conductor plate M, is decided based on results of a simulation and a numerical analysis, for example. In the simulation, heating of the conductor plate M is performed by using an experimental device simulating induction heating of the conductor plate M, for example. From the conductor plate M after the heating, the quality of the conductor plate M can be checked. In the numerical analysis, a numerical simulation simulating the induction heating of the conductor plate M is performed, for example. In the numerical simulation, for example, at least one calculation out of a calculation of magnetic flux density inside and outside the conductor plate M, a calculation of magnetic property of the conductor plate M, and a calculation of crystal structure of the conductor plate M, is performed. From results of the numerical simulation, the quality of the conductor plate M can be checked.

Ratios of the volumes of the cores 1120, 1220 in the heating amount increased region to the volumes of the cores 1120, 1220 in the heating amount decreased region, are determined according to at which degree the heating value of the conductor plate M that is passing through the heating downstream-side region and the heating value of the conductor plate M that is passing through the heating upstream-side region should be differed. From a viewpoint of making the quality of the conductor plate M to be clearly differed between a case where there is such a difference and a case where there is no such a difference, the ratios of the volumes of the cores 1120, 1220 in the heating amount increased region to the volumes of the cores 1120, 1220 in the heating amount decreased region, are preferably 5.1 or more, respectively.

Fig. 1 to Fig. 4 exemplify a case where the cores 1120, 1220 have center-side leg portions 1121, 1221, center-side body portions 1122, 1222, end-side body portions 1123, 1223, and end-side leg portions 1124, 1224, respectively. Note that in Fig. 1 to Fig. 4, the center-side leg portions 1121, 1221, the center-side body portions 1122, 1222, the end-side body portions 1123, 1223, and the end-side leg portions 1124, 1224 are indicated by a two-dot chain line (a virtual line), for the convenience of notation and explanation.

The center-side leg portions 1121, 1221 are arranged in hollow regions of the coils 1110, 1210, respectively. Fig. 1 to Fig. 4 exemplify a case where the center-side leg portions 1121, 1221 are arranged so that center positions in the heating length direction (y-axis direction) of the center-side leg portions 1121, 1221 become the reference position SP. The end-side leg portions 1124, 1224 are arranged on the heating amount increased region side (y-axis positive direction side in Fig. 1 to Fig. 4) relative to the coils 1110, 1210, respectively. The center-side body portions 1122, 1222, and the end-side body portions 1123, 1223 are arranged on a back side relative to the coils 1110, 1210, respectively. The back side corresponds to an opposite side of the side where the conductor plate M exists (specifically, the side where the conductor plate M does not exist). The back side in the upper inductor 1100 corresponds to the side where the lower inductor 1200 does not exist. The back side in the lower inductor 1200 corresponds to the side where the upper inductor 1100 does not exist. In the example illustrated in Fig. 1 to Fig. 4, the back side relative to the coil 1110 corresponds to the z-axis positive direction side relative to the coil 1110, and the back side relative to the coil 1210 corresponds to the z-axis negative direction side relative to the coil 1210. The center-side body portions 1122, 1222 include regions on the heating amount increased region side (y-axis positive direction side in Fig. 1 to Fig. 4) relative to the center-side leg portions 1121, 1221, respectively. The end-side body portions 1123, 1223 are arranged on the heating amount increased region side relative to the center-side body portions 1122, 1222, and the coils 1110, 1210, respectively.

Fig. 1 to Fig. 4 exemplify a case where the center-side leg portions 1121, 1221, the center-side body portions 1122, 1222, the end-side body portions 1123, 1223, and the end-side leg portions 1124, 1224 have a rectangular parallelepiped shape. Further, Fig. 1 to Fig. 4 exemplify a case where lengths in the width direction (x-axis direction) of the center-side leg portions 1121, 1221, the center-side body portions 1122, 1222, the end-side body portions 1123, 1223, and the end-side leg portions 1124, 1224 are the same. Further, Fig. 1 to Fig. 4 exemplify a case where tip faces (end faces on the conductor plate M side) of the center-side leg portions 1121, 1221 are arranged on the conductor plate M side relative to the coils 1110, 1210. Further, Fig. 1 to Fig. 4 exemplify a case where the coils 1110, 1210 are arranged on the conductor plate M side relative to tip faces of the end-side leg portions 1124, 1224. Further, Fig. 1 to Fig. 4 exemplify a case where lengths in the plate thickness direction (z-axis direction) of the center-side body portions 1122, 1222 and the end-side body portions 1123, 1223 are the same. Further, Fig. 1 to Fig. 4 exemplify a case where the center-side body portion 1122 and the end-side body portion 1123 are magnetically connected to form one rectangular parallelepiped shape as a whole. In like manner, Fig. 1 to Fig. 4 exemplify a case where the center-side body portion 1222 and the end-side body portion 1223 are magnetically connected to form one rectangular parallelepiped shape as a whole. Note that when the portions are magnetically connected, this means that the same main magnetic flux flows through the portions as the main magnetic flux described above while referring to Fig. 5.

Fig. 1 to Fig. 4 exemplify a case where the center-side body portion 1122 is arranged on the back side relative to the center-side leg portion 1121. Concretely, Fig. 1 to Fig. 4 exemplify a case where a base end face (an end face on the opposite side of the conductor plate M side) of the center-side leg portion 1121 is connected to the center-side body portion 1122 in a seamless manner. Therefore, a main magnetic flux same as the main magnetic flux that flows through the center-side body portion 1122, flows through the center-side leg portion 1121. Further, Fig. 1 to Fig. 4 exemplify a case where the center-side body portion 1122 is arranged on the upstream side relative to the end-side body portion 1123. Concretely, Fig. 1 to Fig. 4 exemplify a case where an end face on the downstream side of the center-side body portion 1122 is connected to an end face on the upstream side of the end-side body portion 1123 in a seamless manner. Therefore, a main magnetic flux same as the main magnetic flux that flows through the end-side body portion 1123, flows through the center-side body portion 1122.

Further, Fig. 1 to Fig. 4 exemplify a case where the end-side body portion 1123 is arranged on the back side relative to the end-side leg portion 1124. Concretely, Fig. 1 to Fig. 4 exemplify a case where a base end face of the end-side leg portion 1124 is connected to the end-side body portion 1123 in a seamless manner. Therefore, a main magnetic flux same as the main magnetic flux that flows through the end-side leg portion 1124, flows through the end-side body portion 1123.

Further, Fig. 1 to Fig. 4 exemplify a case where a tip face of the center-side leg portion 1121 and a tip face of the end-side leg portion 1124 face the plate surface (the surface on the z-axis positive direction side) of the conductor plate M in a state of having an interval therebetween.

In like manner, a case is exemplified in which the center-side body portion 1222 is arranged on the back side relative to the center-side leg portion 1221. Concretely, Fig. 1 to Fig. 4 exemplify a case where a base end face (an end face on the opposite side of the conductor plate M side) of the center-side leg portion 1221 is connected to the center-side body portion 1222 in a seamless manner. Therefore, a main magnetic flux same as the main magnetic flux that flows through the center-side body portion 1222, flows through the center-side leg portion 1221. Further, Fig. 1 to Fig. 4 exemplify a case where the center-side body portion 1222 is arranged on the upstream side relative to the end-side body portion 1223. Concretely, Fig. 1 to Fig. 4 exemplify a case where an end face on the downstream side of the center-side body portion 1222 is connected to an end face on the upstream side of the end-side body portion 1223 in a seamless manner. Therefore, a main magnetic flux same as the main magnetic flux that flows through the end-side body portion 1223, flows through the center-side body portion 1222.

Further, Fig. 1 to Fig. 4 exemplify a case where the end-side body portion 1223 is arranged on the back side relative to the end-side leg portion 1224. Concretely, Fig. 1 to Fig. 4 exemplify a case where a base end face of the end-side leg portion 1224 is connected to the end-side body portion 1223 in a seamless manner. Therefore, a main magnetic flux same as the main magnetic flux that flows through the end-side leg portion 1224, flows through the end-side body portion 1223.

Further, Fig. 1 to Fig. 4 exemplify a case where a tip face of the center-side leg portion 1221 and a tip face of the end-side leg portion 1224 face the plate surface (the surface on the z-axis negative direction side) of the conductor plate M in a state of having an interval therebetween.

Further, Fig. 1 to Fig. 4 exemplify a case where positions of end portions in the width direction (x-axis direction) of the center-side leg portions 1121, 1221, the center-side body portions 1122, 1222, the end-side body portions 1123, 1223, and the end-side leg portions 1124, 1224 are respectively aligned. Specifically, Fig. 1 to Fig. 4 exemplify a case where the positions of the end portions on the x-axis positive direction side of the center-side leg portions 1121, 1221, the center-side body portions 1122, 1222, the end-side body portions 1123, 1223, and the end-side leg portions 1124, 1224 are respectively the same. Further, Fig. 1 to Fig. 4 exemplify a case where the positions of the end portions on the x-axis negative direction side of the center-side leg portions 1121, 1221, the center-side body portions 1122, 1222, the end-side body portions 1123, 1223, and the end-side leg portions 1124, 1224 are respectively the same.

Further, Fig. 1 to Fig. 4 exemplify a case where there exists no portion of the cores 1120, 1220 except for the center-side leg portions 1121, 1221, and the center-side body portions 1122, 1222, in the heating amount decreased region.

Note that here, for the convenience of explanation, the configuration of the cores 1120, 1220 has been explained while dividing it into the center-side leg portions 1121, 1221, the center-side body portions 1122, 1222, the end-side body portions 1123, 1223, and the end-side leg portions 1124, 1224, respectively. However, the center-side leg portions 1121, 1221, the center-side body portions 1122, 1222, the end-side body portions 1123, 1223, and the end-side leg portions 1124, 1224, are integrated, respectively. Therefore, there is no boundary line at boundaries among the center-side leg portions 1121, 1221, the center-side body portions 1122, 1222, the end-side body portions 1123, 1223, and the end-side leg portions 1124, 1224. However, it is also possible that they are manufactured as separate portions and combined, to thereby configure one core. For example, at least two portions out of the center-side leg portion 1121, the center-side body portion 1122, the end-side body portion 1123, and the end-side leg portion 1124 may be arranged in a state of having an interval therebetween. However, the at least two portions are configured and arranged so that the same main magnetic flux flows through the at least two portions. In like manner, at least two portions out of the center-side leg portion 1221, the center-side body portion 1222, the end-side body portion 1223, and the end-side leg portion 1224 may be arranged in a state of having an interval therebetween. However, the at least two portions are configured and arranged so that the same main magnetic flux flows through the at least two portions.

Further, the induction heating device 1000 of the present embodiment has leakage flux reducing members 1140, 1240. The leakage flux reducing members 1140, 1240 are respectively arranged to reduce leakage of magnetic flux generated when the cores 1120, 1220 are excited by the alternating currents that flow through the coils 1110, 1210. The leakage flux is a magnetic flux that does not contribute to the heating of the conductor plate M. The leakage flux is a magnetic flux that does not pass through the conductor plate M, out of magnetic fluxes generated from the cores 1120, 1220.

The leakage flux reducing members 1140, 1240 are arranged in the heating amount decreased region. Fig. 1 to Fig. 4 exemplify a case where the leakage flux reducing members 1140, 1240 are arranged to face end faces on the back side of the coils 1110, 1210, in a state of having an interval therebetween. Further, the present embodiment exemplifies a case where the leakage flux reducing member is not arranged in the heating amount increased region. However, the leakage flux reducing member may also be arranged in the heating amount increased region.

Further, Fig. 1 to Fig. 4 exemplify a case where each of the leakage flux reducing members 1140, 1240 is one piece of plate. Further, Fig. 1 to Fig. 4 exemplify a case where lengths in the width direction (x-axis direction) of the leakage flux reducing members 1140, 1240 are the same as the lengths in the width direction of the cores 1120, 1220, respectively. Further, Fig. 1 to Fig. 4 exemplify a case where lengths in the heating length direction (y-axis direction) of the leakage flux reducing members 1140, 1240 have values obtained by subtracting the lengths in the heating length direction of the center-side leg portions 1121, 1221 from the lengths in the heating length direction of the center-side body portions 1122, 1222, respectively. Further, Fig. 1 to Fig. 4 exemplify a case where positions of surfaces on the back side of the leakage flux reducing members 1140, 1240, and the positions of the surfaces on the back side of the cores 1120, 1220 are aligned (the positions in the z-axis direction of the surfaces are the same), respectively. Further, Fig. 1 to Fig. 4 exemplify a case where positions of end portions in the width direction (x-axis direction) of the leakage flux reducing members 1140, 1240, and the positions of the end portions in the width direction of the cores 1120, 1220 are respectively aligned (the positions of the end portions in the x-axis positive direction side, and the positions of the end portions in the x-axis negative direction side are respectively the same). Further, Fig. 1 to Fig. 4 exemplify a case where a plate surface of the plate configuring each of the leakage flux reducing members 1140, 1240 is substantially parallel (preferably parallel) to the plate surface of the conductor plate M.

From a viewpoint of reducing the leakage of magnetic flux generated when the cores 1120, 1220 are excited by the alternating current that flows through the coil 1110, the leakage flux reducing members 1140, 1240 are preferably configured by using a nonmagnetic material. Further, from a viewpoint of suppressing heat generation of the induction heating device 1000, the leakage flux reducing members 1140, 1240 are more preferably configured by using copper with high heat conductivity. The present embodiment exemplifies a case where each of the leakage flux reducing members 1140, 1240 has one piece of copper plate. Note that the leakage flux reducing members 1140, 1240 may also be configured by using a plurality of pieces of copper plate stacked so that plate surfaces thereof face each other, for example.

Further, the induction heating device 1000 of the present embodiment has interposed members 1130, 1230. The interposed members 1130, 1230 are respectively used for performing positioning of the leakage flux reducing members 1140, 1240, securement of electric insulation between the coils 1110, 1210 and the leakage flux reducing members 1140, 1240, and the like. The interposed members 1130, 1230 are respectively arranged between the leakage flux reducing members 1140, 1240, and the coils 1110, 1210. From a viewpoint of securing the electric insulation between the coils 1110, 1210, and the leakage flux reducing members 1140, 1240, and reducing the soft magnetic material in the heating amount decreased region, the interposed members 1130, 1230 are preferably configured by using a resinous material. The resinous material is, for example, a glass epoxy resin or a phenol resin. Fig. 1 to Fig. 4 exemplify a case where the interposed members 1130, 1230 have a rectangular parallelepiped shape having a size same as a space between the leakage flux reducing members 1140, 1240 and the coils 1110, 1210.

As illustrated in Fig. 1, in the induction heating device 1000 of the present embodiment, the cores 1120, 1220 do not exist on the upstream side (y-axis negative direction side) relative to the center-side leg portions 1121, 1221, respectively. Therefore, if the leakage flux reducing members 1140, 1240 do not exist, magnetic fluxes emitted from the cores 1120, 1220 toward the upstream side (y-axis negative direction side) relative to the cores 1120, 1220, are likely to become leakage fluxes that do not pass through the conductor plate M, for example. On the contrary, by arranging the leakage flux reducing members 1140, 1240, the magnetic fluxes emitted from the cores 1120, 1220 toward the upstream side (y-axis negative direction side) relative to the cores 1120, 1220, are likely to be directed in the direction of the conductor plate M, when compared to a case where the leakage flux reducing members 1140, 1240 are not arranged (refer to magnetic flux lines ϕ19, ϕ21, ϕ23, ϕ25, ϕ27, ϕ29, ϕ31 illustrated in Fig. 5). Therefore, these magnetic fluxes are difficult to become leakage fluxes (specifically, they are likely to become main magnetic fluxes).

Note that the induction heating device 1000 may also have a not-illustrated shield plate for preventing overheating of the edge portion (the end portion in the width direction) of the conductor plate M. For example, the shield plates are arranged between the edge portion of the conductor plate M, and the cores 1120, 1220, respectively. Further, the shield plate may also move in accordance with the width of the conductor plate M and a meandering amount (a movement amount in the width direction) of the conductor plate M. Note that the shield plate is used for suppressing the passage of the main magnetic flux through the edge portion of the conductor plate M, and is not used for reducing the leakage flux.

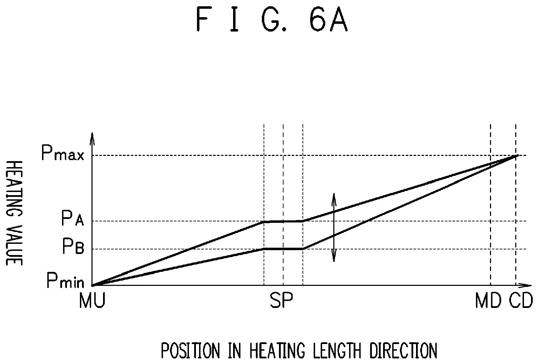

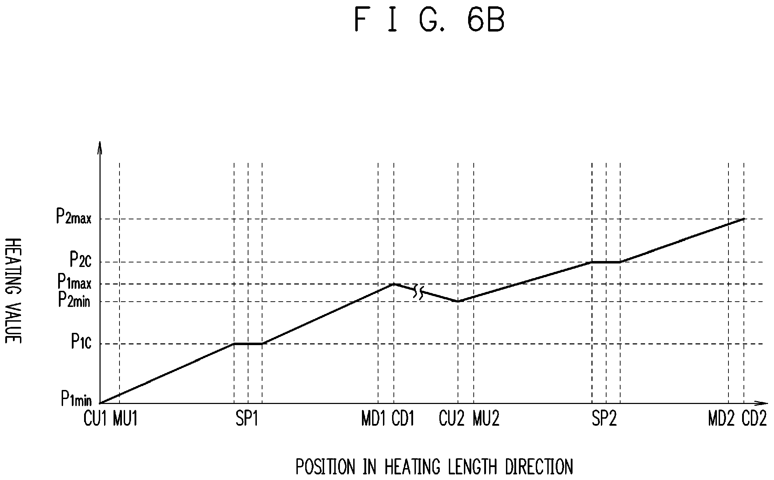

Fig. 6A is a view conceptually illustrating one example a heating value of the conductor plate M that is heated by using the induction heating device 1000 of the present embodiment. Fig. 6B is a view conceptually illustrating one example of a heating value of the conductor plate M that is heated by using two general induction heating devices, as induction heating devices. The two general induction heating devices are arranged in a state of having an interval therebetween in the heating length direction (y-axis direction).

In Fig. 6A, Pₘᵢₙ is a minimum value of the heating value at a certain portion of the conductor plate M that is passing through the induction heating device 1000. The portion is, for example, a center portion in the width direction (x-axis direction).
As illustrated in Fig. 6A, the heating value at each portion of the conductor plate M that is passing through the induction heating device 1000 of the present embodiment, becomes the minimum at the most upstream end position of coil MU. Pₘₐₓ is a maximum value of the heating value at a certain portion of the conductor plate M that is passing through the induction heating device 1000. As illustrated in Fig. 6A, the heating value at each portion of the conductor plate M that is passing through the induction heating device 1000 of the present embodiment, becomes the maximum at the most downstream position CD. Further, in Fig. 6A, P_{A}, P_{B} are heating values at certain portions of the conductor plate M that is passing though the center-side leg portions 1121, 1221 provided to the induction heating device 1000.

As described above, in the induction heating device 1000 of the present embodiment, in one core 1120, 1220, the volume in the heating upstream-side region and the volume in the heating downstream-side region are made to differ. By adjusting the volume in the heating upstream-side region and the volume in the heating downstream-side region, the heating values at respective portions of the conductor plate M that is passing through the center-side leg portions 1121, 1221 provided to the induction heating device 1000 can be adjusted to the heating values P_{A}, P_{B}, and the like (this is indicated by a two-headed arrow line illustrated in Fig. 6A). Therefore, it is possible to make the heating value of the conductor plate M (specifically, the heating amount with respect to the conductor plate M) on the downstream side relative to the reference position SP, and the heating value of the conductor plate M on the upstream side relative to the reference position SP, to be differed from each other. Accordingly, it is possible to make a temperature increasing rate in the heating length direction (y-axis direction) in the region on the upstream side relative to the reference position SP, and a temperature increasing rate in the heating length direction in the region on the downstream side relative to the reference position SP, to be differed from each other, in one core 1120, 1220. From the above, it is possible to adjust the quality of the conductor plate M by adjusting the volume in the heating upstream-side region and the volume in the heating downstream-side region.

In Fig. 6B, CU1 expresses the most upstream position of the induction heating device arranged on the upstream side, out of the two general induction heating devices. The most upstream position is a position of an end portion positioned on the most upstream side (y-axis negative direction side) in the heating length direction (y-axis direction) out of end portions of an upper inductor and a lower inductor. Note that in the induction heating device 1000 of the present embodiment, a case is exemplified in which the most upstream end position of coil MU and the most upstream position are the same position.

MU1 expresses the most upstream end position of coil of the induction heating device arranged on the upstream side. SP1 expresses a reference position of the induction heating device arranged on the upstream side. MD1 expresses the most downstream end position of coil of the induction heating device arranged on the upstream side. CD1 expresses the most downstream position of the induction heating device arranged on the upstream side.

P₁ₘᵢₙ is a minimum value of a heating value at a certain portion of the conductor plate M that is passing through the induction heating device arranged on the upstream side, out of the two general induction heating devices. As illustrated in Fig. 6B, the heating value at each portion of the conductor plate M that is passing through the induction heating device arranged on the upstream side, becomes the minimum at the most upstream position of coil CU1. P₁ₘₐₓ is a maximum value of a heating value at a certain portion of the conductor plate M that is passing through the induction heating device arranged on the upstream side. As illustrated in Fig. 6B, the heating value at each portion of the conductor plate M that is passing through the induction heating device arranged on the upstream side, becomes the maximum at the most downstream position CD1. Further, in Fig. 6B, P_{1C} is a heating value at a certain portion of the conductor plate M that is passing through a center-side leg portion provided to the induction heating device arranged on the upstream side.

In the general induction heating device, the volume of one core is the same between the heating upstream-side region and the heating downstream-side region. Therefore, the heating value P_{1C} at each portion of the conductor plate M that is passing through the center-side leg portion provided to the induction heating device arranged on the upstream side, out of the two general induction heating devices, is fixed to 1/2 times the maximum value P₁ₘₐₓ of the heating value at the corresponding portion of the conductor plate M that is passing through the induction heating device arranged on the upstream side.

Further, in Fig. 6B, CU2 expresses the most upstream position of the induction heating device arranged on the downstream side, out of the two general induction heating devices. MU2 expresses the most upstream end position of coil of the induction heating device arranged on the downstream side. SP2 expresses a reference position of the induction heating device arranged on the downstream side. MD2 expresses the most downstream end position of coil of the induction heating device arranged on the downstream side. CD2 expresses the most downstream position of the induction heating device arranged on the downstream side.

P₂ₘᵢₙ is a minimum value of a heating value at a certain portion of the conductor plate M that is passing through the induction heating device arranged on the downstream side, out of the two general induction heating devices. As illustrated in Fig. 6B, the heating value at each portion of the conductor plate M that is passing through the induction heating device arranged on the downstream side, becomes the minimum at the most upstream position of coil CU2. P₂ₘₐₓ is a maximum value of a heating value at a certain portion of the conductor plate M that is passing through the induction heating device arranged on the downstream side. As illustrated in Fig. 6B, the heating value at each portion of the conductor plate M that is passing through the induction heating device arranged on the downstream side, becomes the maximum at the most downstream position CD2. Further, in Fig. 6B, P_{2C} is a heating value at a certain portion of the conductor plate M that is passing through a center-side leg portion provided to the induction heating device arranged on the downstream side.

As described above, in the general induction heating device, the volume of one core is the same between the heating upstream-side region and the heating downstream-side region. Therefore, the heating value P_{2C} at each portion of the conductor plate M that is passing through the center-side leg portion provided to the induction heating device arranged on the downstream side, out of the two general induction heating devices, is fixed to 1/2 times the maximum value P₂ₘₐₓ of the heating value at the corresponding portion of the conductor plate M that is passing through the induction heating device arranged on the downstream side.

In each of the induction heating devices described in Patent Literatures 1 to 3, the volume of one core is the same between the heating upstream-side region and the heating downstream-side region. Therefore, it is only possible to make the heating value of the conductor plate M (specifically, the heating amount with respect to the conductor plate M) on the upstream side relative to the reference positions SP1, SP2, and the heating value of the conductor plate M on the downstream side relative to the reference positions SP1, SP2 to be the same. Further, it is not possible to adjust the heating value of the conductor plate M in the heating length direction (y-axis direction) without using a plurality of induction heating devices. Specifically, it is not possible to adjust the heating value of the conductor plate M in the heating length direction (y-axis direction) without using a plurality of cores as the cores provided to the upper inductor. In like manner, it is not possible to adjust the heating value of the conductor plate M in the heating length direction (y-axis direction) without using a plurality of cores as the cores provided to the lower inductor. Therefore, a period of time for which the conductor plate M is heated by the induction heating device becomes long, when compared to the induction heating device 1000 of the present embodiment. Further, as illustrated in Fig. 6B, there is generated a region, between the two induction heating devices, in which the conductor plate M is not heated. Accordingly, there is a possibility that a temperature of the conductor plate M is lowered when the conductor plate M is being conveyed between the two induction heating devices. Based on the above, there is a possibility that the quality required as the quality of the conductor plate M cannot be satisfied, and besides, the following demerits may be generated, for example. Specifically, a large space has to be secured for installing the induction heating devices. Further, a cost is increased due to the installation of a plurality of induction heating devices.

### (Design method)

Next, an explanation will be made on one example of a design method of dimensions of the cores 1120, 1220 for configuring the induction heating device so as to be able to perform induction heating on the conductor plate to satisfy the quality required of the conductor plate. Here, the design method of dimensions of the cores 1120, 1220 in a case where the heating upstream-side region is the heating amount decreased region, and the heating downstream-side region is the heating amount increased region, will be exemplified.

A length (mm) in the heating length direction (y-axis direction) of each of the leakage flux reducing members 1140, 1240 is set to W₁. A length (mm) in the heating length direction (y-axis direction) of each of the center-side body portions 1122, 1222 is set to W₂ (> W₁). A length (mm) in the heating length direction (y-axis direction) of each of the end-side body portions 1123, 1223 is set to W₃. A length (mm) in the plate thickness direction (z-axis direction) of each of the end-side leg portions 1124, 1224 is set to W₄. A length (mm) in the plate thickness direction (z-axis direction) of each of regions of the center-side leg portions 1121, 1221 projecting toward the conductor plate M side relative to the tip faces of the coils 1110, 1210 is set to W₅. Note that W₁ to W₅ illustrated in Fig. 1 to Fig. 4 express these lengths.

Further, in a case where an attention is focused on a certain portion of the conductor plate M, a heating value ratio (%) of the portion is set to P (P₁ to P₄). The heating value ratio P of a certain portion of the conductor plate M is one expressing, on percentage, a ratio of a heating value in the heating upstream-side region when the portion is passing through the region to a heating value of the portion when it is passing through the induction heating device 1000 (the heating upstream-side region and the heating downstream-side region). Note that in the example illustrated in Fig. 6A, the heating value ratio P is expressed by P_{A} ÷ Pₘₐₓ × 100 and P_{B} ÷ Pₘₐₓ × 100.

The present inventors performed a numerical analysis on the induction heating device by configuring cores while making combinations of numerical values of W₁ to W₅ to be differed, and calculated the heating value ratio P in each of the combinations. Note that conditions other than the numerical values of W₁ to W₅ are set to be the same. Further, numerical values given as respective symbols P₁ to P₄, W₁ to W₅ in the notation of mathematical formulas below are assumed to be 0 (zero) or positive values. Therefore, for example, -W₁ becomes 0 (zero) or a negative value.

First, P₁ being the heating value ratio P in a case of making only W₁ and W₂ to be differed was calculated through the numerical analysis. Note that when changing W₁ and W₂, it was set to satisfy the condition of W₂ > W₁. Further, when W₁ + W₂ is set to a constant value and then W₁ is made to be shorter than that in a state illustrated in Fig. 1, W₂ was made to be long by assuming that a part of region on the heating amount increased region side (y-axis positive direction side in Fig. 1) out of the regions of the interposed members 1130, 1230 and the leakage flux reducing members 1140, 1240 illustrated in Fig. 1, is the region of the core 1120. Specifically, the center-side body portions 1122, 1222 were extended toward the heating amount decreased region side (y-axis negative direction side in Fig. 1). However, the most upstream end position of coil MU is not changed. Further, from the result of the numerical analysis, a regression formula (regression coefficient and constant) expressing a relation between P₁, and W₁ and W₂, was calculated through a regression analysis. As a result of this, it was possible to favorably reproduce the result of numerical analysis by setting P₁ to a function of W₁ / (W₁ + W₂), as in the following formula (1). In the formula (1), P₁ becomes smaller as W₁ increases. Note that the formula (1) is a simple regression formula in which W₁ / (W₁ + W₂) is set to an explanatory variable.
[Mathematical formula 1] ${P}_{1} = f \left(\frac{{W}_{1}}{{W}_{1} + {W}_{2}}\right)$

Next, P₂ being the heating value ratio P in a case of making not only W₁ and W₂ but also W₃ to be differed was calculated through the numerical analysis. Further, from the result of the numerical analysis, a regression formula including P₁ of the formula (1) was calculated through the regression analysis, as a regression formula expressing a relation between P₂, and W₁, W₂, and W₃. As a result of this, it was possible to favorably reproduce the result of numerical analysis by expressing P₂ by a formula in which a function f (W₃ / (W₂ + W₃) of W₃ / (W₂ + W₃) is subtracted from P₁, as in the following formula (2). In the formula (2), P₂ becomes smaller as W₃ increases. The function f (W₃ / (W₂ + W₃) of the right side of the formula (2) indicates that, when the end-side body portions 1123, 1223 exist, each region of the conductor plate M further generates heat by a value of the function f (W₃ / W₂ + W₃) in the heating downstream-side region (heating amount increased region), when compared to a case where the end-side body portions 1123, 1223 do not exist. Note that the formula (2) is a multiple regression formula in which W₁ / (W₁ + W₂) and W₃ / (W₂ + W₃) are set to explanatory variables.
[Mathematical formula 2] ${P}_{2} = {P}_{1} - f \left(\frac{{W}_{3}}{{W}_{2} + {W}_{3}}\right)$

Next, P4 being the heating value ratio P in a case of making not only W₁, W₂, and W₃ but also W₄ to be differed was calculated through the numerical analysis. Further, from the result of the numerical analysis, a regression formula including P₂ of the formula (2) was calculated through the regression analysis, as a regression formula expressing a relation between P4, and W₁, W₂, W₃, and W₄. As a result of this, it was possible to favorably reproduce the result of numerical analysis by expressing P₃ by a formula in which a function f (W₄) of W₄ is subtracted from P₂, as in the following formula (3). In the formula (3), P₃ becomes smaller as W₄ increases. The function f (W₄) of the right side of the formula (3) indicates that, when the end-side leg portions 1124, 1224 exist, each region of the conductor plate M further generates heat by f (W₄) in the heating downstream-side region (heating amount increased region), when compared to a case where the end-side leg portions 1124, 1224 do not exist. Note that the formula (3) is a multiple regression formula in which W₁ / (W₁ + W₂), W₃ / (W₂ + W₃), and W₄ are set to explanatory variables.
[Mathematical formula 3] ${P}_{3} = {P}_{2} - f \left({W}_{4}\right)$

At last, the heating value ratio P₄ in a case of making W₁, W₂, W₃, W₄, and W₅ to be differed was calculated through the numerical analysis. Further, from the result of the numerical analysis, a regression formula including P₃ of the formula (3) was calculated through the regression analysis, as a regression formula expressing a relation between P, and W₁, W₂, W₃, W₄, and W₅. As a result of this, it was possible to favorably reproduce the result of numerical analysis by expressing P₄ by a formula in which a function f (W₅) of W₅ is added to P₃, as in the following formula (4). In the formula (4), P₄ becomes larger as W₅ increases. The function f (W₅) of the right side of the formula (4) indicates that, when the center-side leg portions 1121, 1221 project toward the conductor plate M side relative to the tip faces of the coils 1110, 1210, each region of the conductor plate M further generates heat by f (W₅) in the heating upstream-side region (heating amount decreased region), when compared to a case where the center-side leg portions do not project toward the conductor plate M side relative to the tip faces of the coils. Note that the formula (4) is a multiple regression formula in which W₁ / (W₁ + W₂), W₃ / (W₂ + W₃), W₄, and W₅ are set to explanatory variables.
[Mathematical formula 4] ${P}_{4} = {P}_{3} + f \left({W}_{5}\right)$

If P₄ is determined based on the quality required of the conductor plate M being the heating target, and W₁, W₂, W₃, W₄, and W₅ are selected so as to satisfy the formula (1) to the formula (4), it is possible to design W₁, W₂, W₃, W₄, and W₅. At least one of W₁, W₃, W₄, and W₅ may also be 0 (zero). When W₁ is 0 (zero), this means that the interposed members 1130, 1230, and the leakage flux reducing members 1140, 1240 are not arranged. When W₃ is 0 (zero), this means that the end-side body portions 1123, 1223, and the end-side leg portions 1124, 1224 are not arranged. When W₄ is 0 (zero), this means that the end-side leg portions 1124, 1224 are not arranged. On the other hand, W₂ never becomes 0 (zero).

As described above, P₄ is decided based on the results of the simulation and the numerical analysis, for example. When performing the simulation, for example, the conductor plate is subjected to induction heating or heating by another method by making an input heat amount in a region corresponding to the heating amount decreased region and an input heat amount in a region corresponding to the heating amount increased region to be differed. It is checked whether or not the quality required of the conductor plate is satisfied, by checking the quality of the conductor plate after being heated. In such a case, P₄ is decided by using the input heat amount when the quality required of the conductor plate is satisfied. Further, when performing the numerical analysis, a crystal structure and a magnetic property of the conductor plate when performing induction heating on the conductor plate by making an input heat amount in a region corresponding to the heating amount decreased region and an input heat amount in a region corresponding to the heating amount increased region to be differed, are calculated, for example. Note that in the numerical analysis, evaluation indices of the crystal structure and the magnetic property of the conductor plate may also be calculated. In such a case, when the calculated result satisfies the quality required of the conductor plate, the input heat amount at that time is used to decide P₄.

### (Other embodiments)

It should be noted that the above explained embodiments of the present invention merely illustrate concrete examples of implementing the present invention, and the technical scope of the present invention is not to be construed in a restrictive manner by these embodiments. That is, the present invention may be implemented in various forms without departing from the main features thereof.

### INDUSTRIAL APPLICABILITY

The present invention can be utilized for heating a conductor plate, for example.

## Claims

1. A transverse flux induction heating device (1000) comprising an upper inductor (1100) and a lower inductor (1200) arranged to face each other while sandwiching a conductor plate (M) therebetween, and performing induction heating on the conductor plate (M) by making alternating magnetic fields intersect a plate surface of the conductor plate(M), wherein:
each of the upper inductor (1100) and the lower inductor (1200) has a coil (1110, 1210) and a core (1120, 1220);
a volume of one piece of the core (1120) provided to the upper inductor (1100) and a volume of one piece of the core (1220) provided to the lower inductor (1200) are respectively different between a heating upstream-side region of the one piece of core and a heating downstream-side region of the one piece of core, **characterised in that**
the heating upstream-side region of the core is a region on an upstream side in a conveyance direction of the conductor plate relative to a reference position (SP) of the core;
the heating downstream-side region of the core (1120, 1220) is a region on a downstream side in the conveyance direction of the conductor plate (M) relative to the reference position (SP) of the core (1120, 1220);
the reference position (SP) of the core (1120, 1220) is a center position in a heating length direction between a most upstream end position of coil (MU) of the core (1120, 1220) and a most downstream end position of coil (MD) of the core (1120, 1220);
the heating length direction is a direction parallel to the conveyance direction of the conductor plate;
the most upstream end position of coil (MU) of the core (1120, 1220) is a position of an end portion positioned on the most upstream side in the heating length direction, out of end portions of the coil (1110, 1210) arranged with respect to the core (1120, 1220);
the most downstream end position of coil (MD) of the core (1120, 1220) is a position of an end portion positioned on the most downstream side in the heating length direction, out of end portions of the coil (1110, 1210) arranged with respect to the core (1120, 1220);
a same main magnetic flux flows through one piece of the core provided to the upper inductor (1100);
a same main magnetic flux flows through one piece of the core provided to the lower inductor (1200); and
the main magnetic flux is a magnetic flux that passes through the conductor plate (M).

2. The transverse flux induction heating device (1000) according to claim 1, wherein:
each of the upper inductor (1100) and the lower inductor (1200) has a leakage flux reducing member (1140, 1240) for reducing a leakage flux;
the leakage flux includes a magnetic flux that does not pass through the conductor plate (M), out of magnetic fluxes generated from the core (1120, 1220);
the leakage flux reducing member (1140, 1240) is arranged in a heating amount decreased region; and
the heating amount decreased region is a region with smaller volume of the core (1120, 1220), out of the heating upstream-side region and the heating downstream-side region.

3. The transverse flux induction heating device (1000) according to claim 2, wherein
the leakage flux reducing member (1140, 1240) contains a non-magnetic material.

4. The transverse flux induction heating device (1000) according to claim 3, wherein
the leakage flux reducing member (1140, 1240) contains copper.

5. The transverse flux induction heating device (1000) according to any one of claims 2 to 4, wherein:
the leakage flux reducing member (1140, 1240) is not arranged in a heating amount increased region; and
the heating amount increased region is a region with larger volume of the core (1120, 1220), out of the heating upstream-side region and the heating downstream-side region.

6. The transverse flux induction heating device (1000) according to any one of claims 2 to 5, wherein:
the leakage flux reducing member (1140, 1240) is arranged on a back side relative to the coil (1110, 1210); and
the back side is an opposite side of a side where the conductor plate (M) exists.

7. The transverse flux induction heating device (1000) according to any one of claims 2 to 6, wherein
each of the upper inductor (1100) and the lower inductor (1200) has an interposed member (1130, 1230) for electrically insulating the leakage flux reducing member (1140, 1240) and the coil (1110, 1210).

8. The transverse flux induction heating device (1000) according to any one of claims 2 to 7, wherein:
the leakage flux reducing member (1140, 1240) has one or a plurality of pieces of plate; and
a plate surface of the plate is substantially parallel to a plate surface of the conductor plate (M) .

9. The transverse flux induction heating device (1000) according to any one of claims 1 to 8, wherein:
a ratio of the volume of the core (1120, 1220) in a heating amount increased region to the volume of the core (1120, 1220) in a heating amount decreased region is 5.1 or more;
the heating amount decreased region is a region with smaller volume of the core (1120, 1220), out of the heating upstream-side region and the heating downstream-side region; and
the heating amount increased region is a region with larger volume of the core (1120, 1220), out of the heating upstream-side region and the heating downstream-side region.

10. The transverse flux induction heating device (1000) according to any one of claims 1 to 9, wherein:
the core (1120, 1220) has:
a center-side leg portion (1121, 1221) arranged in a hollow region of the coil (1110, 1210); and
a center-side body portion (1122, 1222) through which a main magnetic flux same as a main magnetic flux that flows through the center-side leg portion (1121, 1221) flows;
a tip face of the center-side leg portion (1121, 1221) faces the conductor plate (M) in a state of having an interval therebetween;
the center-side body portion (1122, 1222) includes a region on a heating amount increased region side relative to the center-side leg portion (1121, 1221);
the heating amount increased region is a region with larger volume of the core (1120, 1220), out of the heating upstream-side region and the heating downstream-side region;
the center-side body portion (1122, 1222) is arranged on a back side relative to the coil (1110, 1210); and
the back side is an opposite side of the side where the conductor plate (M) exits.

11. The transverse flux induction heating device (1000) according to claim 10, wherein:
each of the upper inductor (1100) and the lower inductor (1200) has a leakage flux reducing member (1140, 1240) for reducing a leakage flux;
the leakage flux includes a magnetic flux that does not pass through the conductor plate (M), out of magnetic fluxes generated from the core;
the leakage flux reducing member (1140, 1240) is arranged in a heating amount decreased region;
the heating amount decreased region is a region with smaller volume of the core (1120, 1220), out of the heating upstream-side region and the heating downstream-side region; and
a length in the heating length direction of the center-side body portion (1122, 1222) is longer than a length in the heating length direction of the leakage flux reducing member (1140, 1240).

12. The transverse flux induction heating device (1000) according to claim 10 or 11, wherein:
the core (1120, 1220) has an end-side body portion (1123, 1223) through which a main magnetic flux same as the main magnetic flux that flows through the center-side body portion (1122, 1222) flows; and
the end-side body portion (1123, 1223) is arranged on the back side relative to the coil (1110, 1210), and arranged on the heating amount increased region side relative to the center-side leg portion (1121, 1221) and the coil (1110, 1210).

13. The transverse flux induction heating device (1000) according to claim 12, wherein:
the core (1120, 1220) has an end-side leg portion (1124, 1224) through which a main magnetic flux same as the main magnetic flux that flows through the end-side body portion (1123, 1223) flows;
the end-side leg portion (1124, 1224) is arranged on the heating amount increased region side relative to the center-side body portion (1122, 1222) and the coil (1110, 1210), and arranged on the conductor plate side relative to the end-side body portion (1123, 1223); and
a tip face of the end-side leg portion (1124, 1224) faces the conductor plate (M) in a state of having an interval therebetween.

14. The transverse flux induction heating device (1000) according to claim 13, wherein
the coil (1110, 1220) is arranged on the conductor plate side relative to the tip face of the end-side leg portion (1124, 1224).

15. The transverse flux induction heating device (1000) according to any one of claims 10 to 14, wherein:
a portion of the core (1120, 1220) except for the center-side leg portion (1121, 1221) and the center-side body portion (1122, 1222) does not exist in a heating amount decreased region; and
the heating amount decreased region is a region with smaller volume of the core (1120, 1220), out of the heating upstream-side region and the heating downstream-side region.

16. The transverse flux induction heating device (1000) according to any one of claims 1 to 15, wherein
the volume of the core (1120, 1220) in the heating downstream-side region is larger than the volume of the core (1120, 1220) in the heating upstream-side region.

## Patentansprüche

1. Querfluss-Induktionsheizvorrichtung (1000) mit einem oberen Induktor (1100) und einem unteren Induktor (1200), die so angeordnet sind, dass sie einander zugewandt sind und dabei ein Leiterblech (M) zwischen sich aufnehmen, und die eine Induktionserwärmung am Leiterblech (M) durchführt, indem sie magnetische Wechselfelder eine Blechoberfläche des Leiterblechs (M) schneiden lässt, wobei:
der obere Induktor (1100) und der untere Induktor (1200) jeweils eine Spule (1110, 1210) und einen Kern (1120, 1220) haben;
ein Volumen eines Stücks des Kerns (1120), der am oberen Induktor (1100) vorgesehen ist, und ein Volumen eines Stücks des Kerns (1220), der am unteren Induktor (1200) vorgesehen ist, sich zwischen einem stromaufwärtsseitigen Heizbereich des einen Kernstücks und einem stromabwärtsseitigen Heizbereich des einen Kernstücks jeweils unterscheiden, **dadurch gekennzeichnet, dass**
der stromaufwärtsseitige Heizbereich des Kerns ein Bereich auf einer Stromaufwärtsseite in einer Förderrichtung des Leiterblechs relativ zu einer Referenzposition (SP) des Kerns ist;
der stromabwärtsseitige Heizbereich des Kerns (1120, 1220) ein Bereich auf einer Stromabwärtsseite in der Förderrichtung des Leiterblechs (M) relativ zur Referenzposition (SP) des Kerns (1120, 1220) ist;
die Referenzposition (SP) des Kerns (1120, 1220) eine Mittelposition in einer Heizlängenrichtung zwischen einer am weitesten stromaufwärts liegenden Spulenendposition (MU) des Kerns (1120, 1220) und einer am weitesten stromabwärts liegenden Spulenendposition (MD) des Kerns (1120, 1220) ist;
die Heizlängenrichtung eine Richtung parallel zur Förderrichtung des Leiterblechs ist;
die am weitesten stromaufwärts liegende Spulenendposition (MU) des Kerns (1120, 1220) eine Position eines Endabschnitts ist, der auf der am weitesten stromaufwärts liegenden Seite in der Heizlängenrichtung aus Endabschnitten der im Hinblick auf den Kern (1120, 1220) angeordneten Spule (1110, 1210) positioniert ist;
die am weitesten stromabwärts liegende Spulenendposition (MD) des Kerns (1120, 1220) eine Position eines Endabschnitts ist, der auf der am weitesten stromabwärts liegenden Seite in der Heizlängenrichtung aus Endabschnitten der im Hinblick auf den Kern (1120, 1220) angeordneten Spule (1110, 1210) positioniert ist;
ein gleicher Hauptmagnetfluss ein Stück des Kerns durchfließt, der am oberen Induktor (1100) vorgesehen ist;
ein gleicher Hauptmagnetfluss ein Stück des Kerns durchfließt, der am unteren Induktor (1200) vorgesehen ist; und
der Hauptmagnetfluss ein Magnetfluss ist, der das Leiterblech (M) durchläuft.

2. Querfluss-Induktionsheizvorrichtung (1000) nach Anspruch 1, wobei:
der obere Induktor (1100) und der untere Induktor (1200) jeweils ein Streufluss-Reduzierteil (1140, 1240) zum Reduzieren eines Streuflusses haben;
der Streufluss einen Magnetfluss, der nicht das Leiterblech (M) durchläuft, aus Magnetflüssen aufweist, die vom Kern (1120, 1220) erzeugt werden;
das Streufluss-Reduzierteil (1140, 1240) in einem Bereich mit verringertem Heizbetrag angeordnet ist; und
der Bereich mit verringertem Heizbetrag ein Bereich mit kleinerem Volumen des Kerns (1120, 1220) aus dem stromaufwärtsseitigen Heizbereich und dem stromabwärtsseitigen Heizbereich ist.

3. Querfluss-Induktionsheizvorrichtung (1000) nach Anspruch 2, wobei das Streufluss-Reduzierteil (1140, 1240) ein nichtmagnetisches Material enthält.

4. Querfluss-Induktionsheizvorrichtung (1000) nach Anspruch 3, wobei das Streufluss-Reduzierteil (1140, 1240) Kupfer enthält.

5. Querfluss-Induktionsheizvorrichtung (1000) nach einem der Ansprüche 2 bis 4, wobei:
das Streufluss-Reduzierteil (1140, 1240) nicht in einem Bereich mit erhöhtem Heizbetrag angeordnet ist; und
der Bereich mit erhöhtem Heizbetrag ein Bereich mit größerem Volumen des Kerns (1120, 1220) aus dem stromaufwärtsseitigen Heizbereich und dem stromabwärtsseitigen Heizbereich ist.

6. Querfluss-Induktionsheizvorrichtung (1000) nach einem der Ansprüche 2 bis 5, wobei:
das Streufluss-Reduzierteil (1140, 1240) auf einer Rückseite relativ zur Spule (1110, 1210) angeordnet ist; und
die Rückseite eine Gegenseite einer Seite ist, auf der das Leiterblech (M) vorhanden ist.

7. Querfluss-Induktionsheizvorrichtung (1000) nach einem der Ansprüche 2 bis 6, wobei
der obere Induktor (1100) und der untere Induktor (1200) jeweils ein eingefügtes Teil (1130, 1230) zum elektrischen Isolieren des Streufluss-Reduzierteils (1140, 1240) und der Spule (1110, 1210) haben.

8. Querfluss-Induktionsheizvorrichtung (1000) nach einem der Ansprüche 2 bis 7, wobei:
das Streufluss-Reduzierteil (1140, 1240) ein oder mehrere Blechstücke hat; und
eine Blechoberfläche des Blechs im Wesentlichen parallel zu einer Blechoberfläche des Leiterblechs (M) ist.

9. Querfluss-Induktionsheizvorrichtung (1000) nach einem der Ansprüche 1 bis 8, wobei:
ein Verhältnis des Volumens des Kerns (1120, 1220) in einem Bereich mit erhöhtem Heizbetrag zum Volumen des Kerns (1120, 1220) in einem Bereich mit verringertem Heizbetrag mindestens 5,1 beträgt;
der Bereich mit verringertem Heizbetrag ein Bereich mit kleinerem Volumen des Kerns (1120, 1220) aus dem stromaufwärtsseitigen Heizbereich und dem stromabwärtsseitigen Heizbereich ist; und
der Bereich mit erhöhtem Heizbetrag ein Bereich mit größerem Volumen des Kerns (1120, 1220) aus dem stromaufwärtsseitigen Heizbereich und dem stromabwärtsseitigen Heizbereich ist.

10. Querfluss-Induktionsheizvorrichtung (1000) nach einem der Ansprüche 1 bis 9, wobei:
der Kern (1120, 1220) Folgendes hat:
einen mittelseitigen Fußabschnitt (1121, 1221), der in einem Hohlbereich der Spule (1110, 1210) angeordnet ist; und
einen mittelseitigen Körperabschnitt (1122, 1222), den ein Hauptmagnetfluss durchfließt, der gleich einem Hauptmagnetfluss ist, der den mittelseitigen Fußabschnitt (1121, 1221) durchfließt;
eine Spitzenfläche des mittelseitigen Fußabschnitts (1121, 1221), die dem Leiterblech (M) zugewandt ist, wobei sie einen Abstand zu diesem aufweist;
der mittelseitige Körperabschnitt (1122, 1222) einen Bereich auf einer Seite eines Bereichs mit erhöhtem Heizbetrag relativ zum mittelseitigen Fußabschnitt (1121, 1221) aufweist;
der Bereich mit erhöhtem Heizbetrag ein Bereich mit größerem Volumen des Kerns (1120, 1220) aus dem stromaufwärtsseitigen Heizbereich und dem stromabwärtsseitigen Heizbereich ist;
der mittelseitige Körperabschnitt (1122, 1222) auf einer Rückseite relativ zur Spule (1110, 1210) angeordnet ist; und
die Rückseite eine Gegenseite der Seite ist, auf der das Leiterblech (M) vorhanden ist.

11. Querfluss-Induktionsheizvorrichtung (1000) nach Anspruch 10, wobei:
der obere Induktor (1100) und der untere Induktor (1200) jeweils ein Streufluss-Reduzierteil (1140, 1240) zum Reduzieren eines Streuflusses haben;
der Streufluss einen Magnetfluss, der nicht das Leiterblech (M) durchläuft, aus Magnetflüssen aufweist, die vom Kern erzeugt werden;
das Streufluss-Reduzierteil (1140, 1240) in einem Bereich mit verringertem Heizbetrag angeordnet ist;
der Bereich mit verringertem Heizbetrag ein Bereich mit kleinerem Volumen des Kerns (1120, 1220) aus dem stromaufwärtsseitigen Heizbereich und dem stromabwärtsseitigen Heizbereich ist; und
eine Länge in der Heizlängenrichtung des mittelseitigen Körperabschnitts (1122, 1222) länger ist als eine Länge in der Heizlängenrichtung des Streufluss-Reduzierteils (1140, 1240).

12. Querfluss-Induktionsheizvorrichtung (1000) nach Anspruch 10 oder 11, wobei:
der Kern (1120, 1220) einen endseitigen Körperabschnitt (1123, 1223) hat, den ein Hauptmagnetfluss durchfließt, der gleich dem Hauptmagnetfluss ist, der den mittelseitigen Körperabschnitt (1122, 1222) durchfließt; und
der endseitige Körperabschnitt (1123, 1223) auf der Rückseite relativ zur Spule (1110, 1210) angeordnet ist und auf der Seite des Bereichs mit erhöhtem Heizbetrag relativ zum mittelseitigen Fußabschnitt (1121, 1221) und zur Spule (1110, 1210) angeordnet ist.

13. Querfluss-Induktionsheizvorrichtung (1000) nach Anspruch 12, wobei:
der Kern (1120, 1220) einen endseitigen Fußabschnitt (1124, 1224) hat, den ein Hauptmagnetfluss durchfließt, der gleich dem Hauptmagnetfluss ist, der den endseitigen Körperabschnitt (1123, 1223) durchfließt;
der endseitige Fußabschnitt (1124, 1224) auf der Seite des Bereichs mit erhöhtem Heizbetrag relativ zum mittelseitigen Körperabschnitt (1122, 1222) und zur Spule (1110, 1210) angeordnet ist und auf der Seite des Leiterblechs relativ zum endseitigen Körperabschnitt (1123, 1223) angeordnet ist; und
eine Spitzenfläche des endseitigen Fußabschnitts (1124, 1224), die dem Leiterblech (M) zugewandt ist, wobei sie einen Abstand zu diesem aufweist.

14. Querfluss-Induktionsheizvorrichtung (1000) nach Anspruch 13, wobei die Spule (1110, 1220) auf der Seite des Leiterblechs relativ zur Spitzenfläche des endseitigen Fußabschnitts (1124, 1224) angeordnet ist.

15. Querfluss-Induktionsheizvorrichtung (1000) nach einem der Ansprüche 10 bis 14, wobei:
ein Abschnitt des Kerns (1120, 1220) mit Ausnahme des mittelseitigen Fußabschnitts (1121, 1221) und des mittelseitigen Körperabschnitts (1122, 1222) nicht in einem Bereich mit verringertem Heizbetrag vorhanden ist; und
der Bereich mit verringertem Heizbetrag ein Bereich mit kleinerem Volumen des Kerns (1120, 1220) aus dem stromaufwärtsseitigen Heizbereich und dem stromabwärtsseitigen Heizbereich ist.

16. Querfluss-Induktionsheizvorrichtung (1000) nach einem der Ansprüche 1 bis 15, wobei
das Volumen des Kerns (1120, 1220) im stromabwärtsseitigen Heizbereich größer ist als das Volumen des Kerns (1120, 1220) im stromaufwärtsseitigen Heizbereich.

## Revendications

1. Dispositif de chauffage par induction à flux transversal (1000) comprenant un inducteur supérieur (1100) et un inducteur inférieur (1200) agencés de manière à se faire face en prenant en sandwich une plaque conductrice (M) entre eux, et effectuant un chauffage par induction sur la plaque conductrice (M) en faisant croiser des champs magnétiques alternatifs avec une surface de plaque de la plaque conductrice (M), dans lequel :
chacun de l'inducteur supérieur (1100) et de l'inducteur inférieur (1200) possède une bobine (1110, 1210) et un noyau (1120, 1220) ;
un volume d'un morceau du noyau (1120) prévu pour l'inducteur supérieur (1100) et un volume d'un morceau du noyau (1220) prévu pour l'inducteur inférieur (1200) sont respectivement différents entre une zone amont de chauffage du morceau de noyau et une zone aval de chauffage du morceau de noyau, **caractérisé en ce que**
la zone amont de chauffage du noyau est une zone sur un côté amont dans une direction de transport de la plaque conductrice par rapport à une position de référence (SP) du noyau ;
la zone aval de chauffage du noyau (1120, 1220) est une zone sur un côté aval dans la direction de transport de la plaque conductrice (M) par rapport à la position de référence (SP) du noyau (1120, 1220) ;
la position de référence (SP) du noyau (1120, 1220) est une position centrale dans une direction de longueur de chauffage entre une position d'extrémité la plus en amont de la bobine (MU) du noyau (1120, 1220) et une position d'extrémité la plus en aval de la bobine (MD) du noyau (1120, 1220) ;
la direction de longueur de chauffage est une direction parallèle à la direction de transport de la plaque conductrice ;
la position d'extrémité la plus en amont de la bobine (MU) du noyau (1120, 1220) est une position d'une partie d'extrémité située sur le côté le plus en amont dans la direction de longueur de chauffage, parmi les parties d'extrémité de la bobine (1110, 1210) agencées par rapport au noyau (1120, 1220) ;
la position d'extrémité la plus en aval de la bobine (MD) du noyau (1120, 1220) est une position d'une partie d'extrémité située sur le côté le plus en aval dans la direction de longueur de chauffage, parmi les parties d'extrémité de la bobine (1110, 1210) agencées par rapport au noyau (1120, 1220) ;
un même flux magnétique principal circule à travers un morceau du noyau prévu pour l'inducteur supérieur (1100) ;
un même flux magnétique principal circule à travers un morceau du noyau prévu pour l'inducteur inférieur (1200) ; et
le flux magnétique principal est un flux magnétique qui traverse la plaque conductrice (M).

2. Dispositif de chauffage par induction à flux transversal (1000) selon la revendication 1, dans lequel :
chacun de l'inducteur supérieur (1100) et de l'inducteur inférieur (1200) possède un élément de réduction du flux de fuite (1140, 1240) destiné à réduire un flux de fuite ;
le flux de fuite comprend un flux magnétique qui ne traverse pas la plaque conductrice (M), parmi les flux magnétiques générés à partir du noyau (1120, 1220) ;
l'élément de réduction du flux de fuite (1140, 1240) est agencé dans une zone à quantité de chauffage réduite ; et
la zone à quantité de chauffage réduite est une zone à plus petit volume de noyau (1120, 1220), parmi la zone amont de chauffage et la zone aval de chauffage.

3. Dispositif de chauffage par induction à flux transversal (1000) selon la revendication 2, dans lequel l'élément de réduction du flux de fuite (1140, 1240) contient un matériau non magnétique.

4. Dispositif de chauffage par induction à flux transversal (1000) selon la revendication 3, dans lequel
l'élément de réduction du flux de fuite (1140, 1240) contient du cuivre.

5. Dispositif de chauffage par induction à flux transversal (1000) selon l'une quelconque des revendications 2 à 4, dans lequel :
l'élément de réduction du flux de fuite (1140, 1240) n'est pas agencé dans une zone à quantité de chauffage augmentée ; et
la zone à quantité de chauffage augmentée est une zone à plus grand volume de noyau (1120, 1220), parmi la zone amont de chauffage et la zone aval de chauffage.

6. Dispositif de chauffage par induction à flux transversal (1000) selon l'une quelconque des revendications 2 à 5, dans lequel :
l'élément de réduction du flux de fuite (1140, 1240) est agencé sur un côté arrière par rapport à la bobine (1110, 1210) ; et
le côté arrière est un côté opposé à un côté sur lequel se trouve la plaque conductrice (M).

7. Dispositif de chauffage par induction à flux transversal (1000) selon l'une quelconque des revendications 2 à 6, dans lequel
chacun de l'inducteur supérieur (1100) et de l'inducteur inférieur (1200) possède un élément interposé (1130, 1230) destiné à isoler électriquement l'élément de réduction du flux de fuite (1140, 1240) et la bobine (1110, 1210).

8. Dispositif de chauffage par induction à flux transversal (1000) selon l'une quelconque des revendications 2 à 7, dans lequel :
l'élément de réduction du flux de fuite (1140, 1240) possède une ou une pluralité de plaques ; et
une surface de plaque de la plaque est sensiblement parallèle à une surface de plaque de la plaque conductrice (M).

9. Dispositif de chauffage par induction à flux transversal (1000) selon l'une quelconque des revendications 1 à 8, dans lequel :
un rapport entre le volume du noyau (1120, 1220) dans une zone à quantité de chauffage augmentée et le volume du noyau (1120, 1220) dans une zone à quantité de chauffage réduite est supérieur ou égal à 5,1 ;
la zone à quantité de chauffage réduite est une zone à plus petit volume de noyau (1120, 1220), parmi la zone amont de chauffage et la zone aval de chauffage ; et
la zone à quantité de chauffage augmentée est une zone à plus grand volume de noyau (1120, 1220), parmi la zone amont de chauffage et la zone aval de chauffage.

10. Dispositif de chauffage par induction à flux transversal (1000) selon l'une quelconque des revendications 1 à 9, dans lequel :
le noyau (1120, 1220) possède :
une partie de patte côté centre (1121, 1221) agencée dans une zone creuse de la bobine (1110, 1210) ; et
une partie de corps côté centre (1122, 1222) à travers laquelle circule un flux magnétique principal identique à un flux magnétique principal qui circule à travers la partie de patte côté centre (1121, 1221) ;
une face d'extrémité de la partie de patte côté centre (1121, 1221) fait face à la plaque conductrice (M) en étant espacée de celle-ci ;
la partie de corps côté centre (1122, 1222) comprend une zone sur un côté de la zone à quantité de chauffage augmentée par rapport à la partie de patte côté centre (1121, 1221) ;
la zone à quantité de chauffage augmentée est une zone à plus grand volume de noyau (1120, 1220), parmi la zone amont de chauffage et la zone aval de chauffage ;
la partie de corps côté centre (1122, 1222) est agencée sur un côté arrière par rapport à la bobine (1110, 1210) ; et
le côté arrière est un côté opposé au côté sur lequel se trouve la plaque conductrice (M).

11. Dispositif de chauffage par induction à flux transversal (1000) selon la revendication 10, dans lequel :
chacun de l'inducteur supérieur (1100) et de l'inducteur inférieur (1200) possède un élément de réduction du flux de fuite (1140, 1240) destiné à réduire un flux de fuite ;
le flux de fuite comprend un flux magnétique qui ne traverse pas la plaque conductrice (M), parmi les flux magnétiques générés à partir du noyau ;
l'élément de réduction du flux de fuite (1140, 1240) est agencé dans une zone à quantité de chauffage réduite ;
la zone à quantité de chauffage réduite est une zone à plus petit volume de noyau (1120, 1220), parmi la zone amont de chauffage et la zone aval de chauffage ; et
une longueur dans la direction de longueur de chauffage de la partie de corps côté centre (1122, 1222) est supérieure à une longueur dans la direction de longueur de chauffage de l'élément de réduction du flux de fuite (1140, 1240).

12. Dispositif de chauffage par induction à flux transversal (1000) selon la revendication 10 ou 11, dans lequel :
le noyau (1120, 1220) possède une partie de corps côté extrémité (1123, 1223) à travers laquelle circule un flux magnétique principal identique au flux magnétique principal qui circule à travers la partie de corps côté centre (1122, 1222) ; et
la partie de corps côté extrémité (1123, 1223) est agencée sur le côté arrière par rapport à la bobine (1110, 1210), et agencée du côté de la zone à quantité de chauffage augmentée par rapport à la partie de patte côté centre (1121, 1221) et à la bobine (1110, 1210).

13. Dispositif de chauffage par induction à flux transversal (1000) selon la revendication 12, dans lequel :
le noyau (1120, 1220) possède une partie de patte côté extrémité (1124, 1224) à travers laquelle circule un flux magnétique principal identique au flux magnétique principal qui circule à travers la partie de corps côté extrémité (1123, 1223) ;
la partie de patte côté extrémité (1124, 1224) est agencée du côté de la zone à quantité de chauffage augmentée par rapport à la partie de corps côté centre (1122, 1222) et à la bobine (1110, 1210), et agencée du côté de la plaque conductrice par rapport à la partie de corps côté extrémité (1123, 1223) ; et
une face d'extrémité de la partie de patte côté extrémité (1124, 1224) fait face à la plaque conductrice (M) en étant espacée de celle-ci.

14. Dispositif de chauffage par induction à flux transversal (1000) selon la revendication 13, dans lequel
la bobine (1110, 1220) est agencée du côté de la plaque conductrice par rapport à la face d'extrémité de la partie de patte côté extrémité (1124, 1224).

15. Dispositif de chauffage par induction à flux transversal (1000) selon l'une quelconque des revendications 10 à 14, dans lequel :
une partie du noyau (1120, 1220), à l'exception de la partie de patte côté centre (1121, 1221) et de la partie de corps côté centre (1122, 1222), n'existe pas dans une zone à quantité de chauffage réduite ; et
la zone à quantité de chauffage réduite est une zone à plus petit volume de noyau (1120, 1220), parmi la zone amont de chauffage et la zone aval de chauffage.

16. Dispositif de chauffage par induction à flux transversal (1000) selon l'une quelconque des revendications 1 à 15,
dans lequel
le volume du noyau (1120, 1220) dans la zone aval de chauffage est supérieur au volume du noyau (1120, 1220) dans la zone amont de chauffage.
